# EUROPEAN PATENT SPECIFICATION

(11) **EP 4 570 654 B1**
(45) Date of publication and mention of the grant of the patent: **25.11.2026**
(21) Application number: 23216460.8
(22) Date of filing: 13.12.2023
(51) Int. Cl.: B64D 11/04

(54) **ADAPTIVE MEAL TRAY POSITIONING**
ADAPTIVE SPEISENSCHALENPOSITIONIERUNG
POSITIONNEMENT ADAPTATIF DE PLATEAUX REPAS

(43) Date of publication of application: 18.06.2025
(73) Proprietor: B/E Aerospace Inc., Winston Salem, NC 27105 (US)
(72) Inventor: PANJER, Frederik Adrian Stephan, Maarsbergen (NL)
(74) Representative: Dehns

(56) References cited:
- CN-A- 110 236 308
- CN-A- 115 644 674
- JP-A- H03 255 816
- US-A- 2 520 412
- US-A- 2 693 176
- US-A- 4 696 285
- US-A1- 2016 081 505
- US-B1- 8 146 534

## Description

### TECHNICAL FIELD

The present invention relates to systems and methods for positioning meals and meal trays in ovens. The ovens may be galley ovens suitable for use on aircraft.

### BACKGROUND

Many modern passenger aircraft are equipped with means for preparing and serving food and drinks for passengers. Meals are typically prepared at sites external to the aircraft and are loaded onto the aircraft prior to departure. So that hot meals may be served to passengers soon after take-off, the pre-prepared meals are often loaded into a galley oven provided on the aircraft prior to take-off. Since the meals require a minimum time in the galley oven to be sufficiently heated, utilising the time during take-off ensures that the passengers wait as little time as possible before receiving their meals. Unfortunately, a common complaint of passengers and crew is that a smell of burning food pervades the cabin during heating of the meals. Investigation has shown that this burning smell is caused by fluids in the meals spilling from their containers onto the heating elements in the oven. This spillage occurs due to the tilting of the internal cabin environment with respect to the direction of gravity during take-off. Since the front end of the aircraft is at an elevated position with respect to the rear end, fluid in the meals tends to spill from the meal containers towards the back of the aircraft. As the heating elements are typically disposed in the rear of the heating cavities of galley ovens, the burning smell is more prevalent in galley ovens disposed at the rear of aircraft that are facing in forward aircraft direction. The present invention provides systems and methods for mitigating or completely avoiding spillage of fluid from meal containers, and the resultant burning smell, in galley ovens of aircraft during take-off. US4696285A and JPH03255816A relate to ovens and CN110236308A relates to a gyroscopic stabilisation mechanism for a storage cabinet.

### SUMMARY

An oven for use in an aircraft is provided and comprises a heating cavity, a meal tray within the heating cavity, a support means configured to support the meal tray within the heating cavity, and an adjustment means configured to, in response to a change in orientation of the oven with respect to the direction of gravity, adjust the support means away from a default unadjusted state such that the upper surface of the meal tray supported thereby is maintained in a plane perpendicular to the direction of gravity.

The oven further comprises a sensor configured to produce an output indicative of the orientation of the oven with respect to the direction of gravity.

The oven further comprises a controller configured to receive the output from the sensor and control the adjustment means based on said output.

The adjustment means may comprise an electric motor coupled to a pulley system, the pulley system coupled to the support means and the electric motor configured to drive the pulley system to adjust the support means.

The adjustment means may comprise one or more linear actuators coupled to the support means.

The support means may comprise a plurality of tray supports mounted to the walls of the heating cavity.

The adjustment means may be configured to adjust the position of at least two of the tray supports with respect to the walls of the heating cavity.

The oven may comprise a plurality of said support means arranged one above another in the heating cavity.

The adjustment means may be configured to adjust each of the plurality of support means simultaneously in the same manner.

The oven may further comprise a biasing means configured to bias the support means into the default unadjusted state upon disengagement of the adjustment means.

An aircraft is also provided, comprising the oven with any combination of the abovementioned features, wherein, in the default unadjusted state, the support means of the oven is configured to support the meal tray such that the upper surface of the meal tray is orientated parallel to the pitch axis and roll axis of the aircraft.

A method of adjusting the orientation of a meal tray in an oven suitable for use in an aircraft is also provided and comprises: sensing, with a sensor, a change in the orientation of the oven with respect to the direction of gravity; receiving an output of the sensor at a controller, using the controller to adjust the orientation of the meal tray supported in the oven with respect to the oven by support means such that the upper surface of the meal tray is maintained in a plane perpendicular to the direction of gravity; wherein the adjusting of the orientation of the meal tray is achieved by adjusting the support means away from a default unadjusted state.

In the method, the support means support the meal tray in a heating cavity in the over and comprises a plurality of tray supports; and the orientation of the meal tray may be adjusted by adjusting the position of two or more tray supports of the plurality of tray supports with respect to the heating cavity.

In the method, a plurality of meal trays may be located in the oven and the adjusting step may be performed on each meal tray simultaneously.

The method may comprise, as an initial step, installing the oven in a galley of an aircraft.

### BRIEF DESCRIPTION OF THE DRAWINGS

Figure 1A illustrates an example known galley oven as viewed from the front, with the oven door closed.
Figure 1B illustrates a galley oven as depicted in Figure 1A, but with the oven door open.
Figure 1C illustrates a side cross-section view of the galley oven shown in Figures 1A and 1B.
Figure 1D illustrates a side cross-section view of the galley oven shown in Figures 1A and 1B in a tilted orientation.
Figure 2A illustrates a galley oven according to the present disclosure comprising adaptive tray positioning means.
Figure 2B illustrates the galley oven of Figure 2A in a tilted orientation.
Figure 2C illustrates a galley oven similar to that of Figure 2B, in a different tilted orientation.
Figure 3 illustrates a tray for use in the galley oven of the present disclosure before and after adapted positioning thereof during take-off.
Figure 4A illustrates a linear actuator system implemented to execute adaptive tray positioning in a galley oven of the present disclosure.
Figure 4B illustrates an electric motor pulley system implemented to execute adaptive tray positioning in a galley oven of the present disclosure.

### DETAILED DESCRIPTION

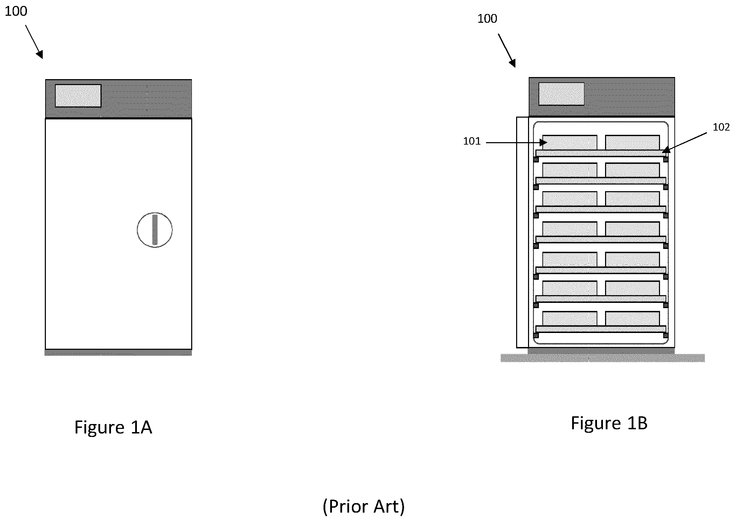

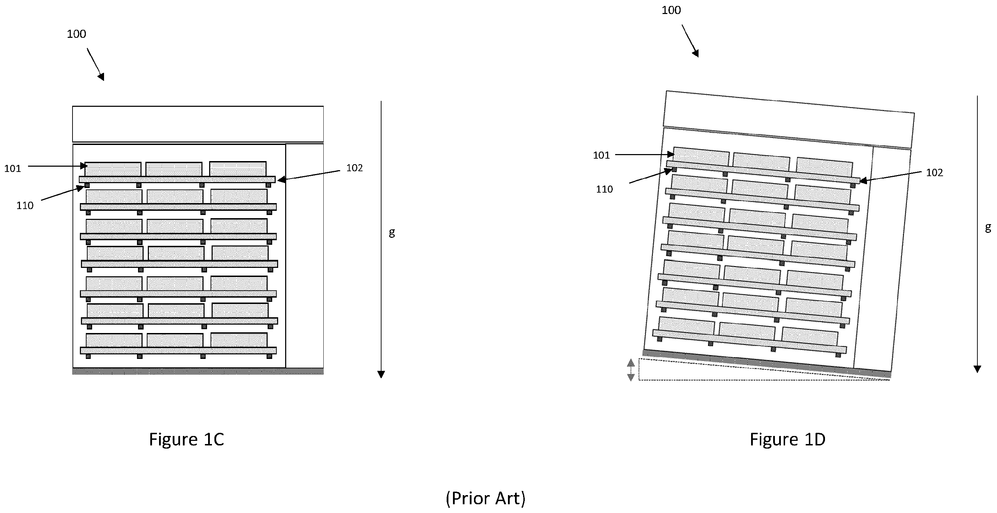

Figures 1A and 1B illustrate an example of a galley oven 100 used in aircraft. In both Figures 1A and 1B, the galley oven 100 is viewed from the front. In Figure 1A, the door of the galley oven 100 is closed. In Figure 1B, the door is open, and the heating cavity and contents thereof can be seen. As shown in Figure 1B, the heating cavity of the galley oven 100 is configured to hold a number of meal trays 102 in a vertically stacked arrangement. Each meal tray 102 is configured to support one or more meal containers 101. In operation, the door of the galley oven 100 is opened, the meal trays 102 meal containers 101 placed thereon are inserted into the oven 100, the door is closed and the meals contained in the meal containers 101 are heated to a desired temperature or for a particular length of time. In order to support the meal trays 102 in the heating cavity of the galley oven 100, the inner surface of the heating cavity thereof is provided with a number of tray supports 110. Configurations of tray supports 110 may vary between known galley ovens 100. In the example shown in Figures 1A to 1C, the inner surface of the heating cavity of the galley oven 100 is provided with a plurality of horizontally aligned supports 110 on each sidewall 214 of the heating cavity, arranged at the front (proximate the oven door) and rear of the heating cavity and at spaced intervals therebetween. The tray supports 110 ensure that meal trays 102 may be inserted and supported horizontally, with respect to the cabin floor, in vertically spaced layers in the galley oven 100.

For the majority of a flight segment, the cabin of an aircraft is orientated generally horizontally. That is, the floor of the aircraft cabin extends generally perpendicular to the direction of gravity. During these times, the tray supports 110 as shown in Figures 1A to 1C perform their function well. The meal trays 102 and meal containers 101 are maintained at a generally perpendicular orientation with respect to the direction of gravity and the contents of the meal containers 101 remain within the meal containers 101. However, during take-off and landing of an aircraft, the aircraft, and therefore also the cabin floor, necessarily, to gain or lose altitude, tilt such that they are no longer orientated perpendicular to the direction of gravity. As the galley oven 100 is fixedly mounted within the aircraft cabin, the oven 100 also experiences such tilting. This is illustrated in Figure 1D, where the arrow g represents the direction of gravity. If meals are already present in the galley oven 100 during take-off, which is often the case, this results in tilting of the meal containers 101 and, as a result, spilling of their contents. Any spillage of contents of the meal containers 101 is naturally problematic, necessitating cleaning and potentially affecting meal quality. However, one particular problem associated with such spillage is the contact of the spilled meal contents with hot surfaces, e.g. heating elements, within the heating cavity of the oven 100. The spilled meal contents, upon said contact, tend to burn and cause a strong odour to exit the oven 100. The burning odour can be so strong as to pervade the cabin and become noticeable to passengers, impacting their customer experience.

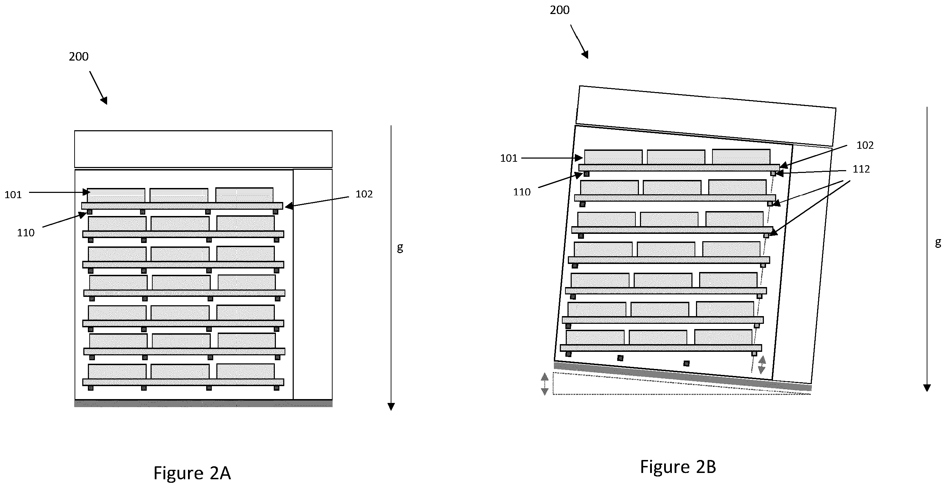

According to the present disclosure, a galley oven 200 as shown in Figures 2A and 2B, is provided. The structure of the galley oven 200 is similar to that of galley 100 as described in relation to Figures 1A to 1D. The galley oven 200 comprises a heating cavity and a door providing access to said heating cavity. Within the heating cavity is provided a support means configured to support a meal tray 102 within the heating cavity. For stability reasons, the support means may provide support for a meal tray at both a first, front end 210 of the heating cavity proximate the oven door and a second, rear end 212 proximate the rear of the oven heating cavity. In some embodiments, the support means may comprise a plurality of tray supports 110, 112. The tray supports 110, 112 are mounted to the sidewalls 214 of the heating cavity and at least two tray supports 110, 112 are configured to assume a number of different mounting positions with respect to the heating cavity sidewalls 214. In other words, at least two tray supports 110, 112 are configured to move in the plane of the heating cavity sidewall 214 to which they are mounted whilst remaining mounted to the said sidewall 214. The tray supports 110, 112 are configured to contact the lower surface of a meal tray 102 to support its weight with respect to the heating cavity. In some embodiments, the plurality of tray supports 110,112 comprises a first tray support pair 110 at the first end, one support of the pair on each sidewall 214, and a second tray support pair 112 at the second end, one support of the pair on each sidewall 214. The support means may further comprise one or more intermediate tray support pairs 111 arranged on the sidewalls 214 between the first and second tray support pairs 110, 112, arranged such that each support of each support pair simultaneously contacts a meal tray placed thereon. To achieve this, each tray support of each of the tray support pairs may lie within the same plane. The support means may be configured to, in a default unadjusted position, support a meal tray 102 such that the upper surface of the meal tray 102 is supported parallel to the floor of the aircraft cabin when the galley oven 200 is installed in an aircraft and the aircraft is on the ground. This configuration is illustrated in Figure 2A. In this figure, the galley oven 200 is shown as if installed in an aircraft cabin when the aircraft cabin floor is orientated generally perpendicular to the direction of gravity, represented by the arrow g in the figure. Such an orientation may correspond to taxiing or cruise portions of a flight segment or when the aircraft is grounded. As also illustrated in Figure 2A, the galley oven 200 may be provided with a plurality of the previously described support means. That is, the galley oven 200 may be configured to support a plurality of meal trays 102 simultaneously through said plurality of support means. Each support means of the plurality of support means may be arranged in the galley oven one above the other, i.e. in a vertically spaced, stacked arrangement as illustrated in Figure 2A.

Figure 2B illustrates the galley oven 200 in a situation where the oven 200 is installed in the rear end of an aircraft, such that the front end 210 of the heating cavity proximate the door faces the front end of the aircraft, and the aircraft has a positive pitch angle, which is non-perpendicular to the direction of gravity, g. When the tilting of the aircraft is referenced in this description, this also implies an equal tilting of the oven 200 and vice versa, since the oven 200 is assumed to be fixedly mounted to the aircraft. The magnitude of the aircraft pitch angle usually peaks during take-off and landing portions of a flight segment. In Figure 2B, a take-off portion is illustrated and the oven 200 is shown as if mounted in an aircraft with a positive pitch angle, i.e. the longitudinal axis of the aircraft is non-perpendicular to the direction of gravity. As mentioned previously, a common practice amongst commercial airlines is to load meals for passengers in the galley oven 200 prior to take-off. This means that the situation illustrated in Figure 1D is commonplace. In order to prevent spillage of the contents of the meal containers 101 placed on the meal tray 102, the oven is provided with an adjustment means configured to adjust the support means such that the upper surface of a meal tray 102 supported thereby is maintained in a generally perpendicular orientation with respect to the direction of gravity, of the upper surface of the meal tray 102, thereby preventing spillage of the contents of any meal containers 101 resting on the meal tray 102. The adjustment means can be configured to automatically make such adjustment in response to the tilting of the oven with respect to the direction of gravity, such as during take-off or landing.

Referring back to Figure 2B, in this embodiment, in order to counteract the effects of the tilting of the aircraft (and oven 200) during take-off, the adjustment means is configured to adjust the support means so as to adjust the position, i.e. raise and lower, the end of the meal tray 102 proximate the rear end 212 of the galley oven 200. This may be implemented through the provision of the second tray support pair 112 as previously described. Each tray support of the second tray support pair 112 may be configured to move with respect to the inner surface of the heating cavity of the oven 200 in response to said tilting of the aircraft. When the tray supports of the first tray support pair 110 proximate the front end 210 of the heating cavity remain in position, and the second tray support pairs 112 rise with respect to the inner surface of the heating cavity, i.e. towards the top of the oven 200, this results in tilting of the meal tray 102 with respect to the rest of the oven 200. As can be appreciated, this functionality can be used to maintain a meal tray 102 in a perpendicular orientation with respect to the direction of gravity during a take-off portion of the flight segment and tilting of the oven 200 with respect to said field.

In order to automate the function of the adjustment means, the oven 200 is provided with a means for determining its tilt with respect to the direction of gravity. This may be an accelerometer or other sensor configured to output a parameter indicative of its orientation with respect to the direction of gravity. The means for determining the tilt of the aircraft and oven 200 is connected in communication with a controller, also provided in the oven 200, capable of commanding the adjustment means to adjust the support means in any desired manner. According to the invention, the controller is configured to receive an output from the means for determining the tilt of the aircraft and, in response, utilising this output, to control the adjustment means to adjust the support means to maintain the upper surface of a meal tray 102 supported thereby perpendicular to the direction of gravity. In the embodiments wherein the support means comprises a plurality of tray supports 110, 112, this would typically equate to raising or lowering two or more of the tray supports 110, 112 so as to counteract the tilt of the aircraft, i.e. to maintain the meal tray 102 in an orientation perpendicular to the direction of gravity.

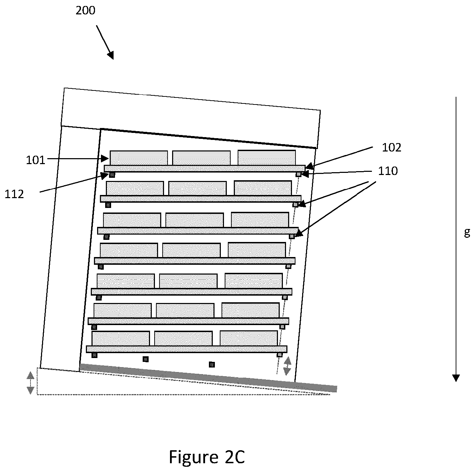

Figure 2C illustrates an oven 200 similar to the oven 200 shown in Figures 2A and 2B, also during a take-off portion of a flight segment. However, this oven 200 is configured to be located in a front portion of an aircraft cabin such that the door of the oven 200 faces the rear end of the aircraft. As can be appreciated, during take-off, the oven 200 illustrated in Figure 2C, due to its facing in an opposite direction to an oven 200 in the rear of the aircraft, as illustrated in Figure 2B, will tilt in an opposite direction to the latter. In other words, in Figure 2C, the front end 210 of the oven 200 will be lower than the rear end 212 during take-off. This means that, in the case where the support means comprises a front tray support pair 110 proximate the front end 210 of the oven 200 and a rear tray support pair 112 proximate the rear end 212 of the oven 200, the adjustment means is likely to raise the front tray support pair 110 with respect to the rear support pair 112 during take-off. This is contrast to the adjustment means of the oven 200 shown in Figure 2B, where the adjustment means would raise the rear tray support pair 112 relative to the front tray support pair 110.

Although specific embodiments have been discussed in which the front end of a meal tray 102 is raised with respect to its rear end, or vice versa, it should be appreciated that the adjustment means may adjust the support means to maintain orientation of a meal tray supported thereby perpendicular to the direction of gravity not only under non-zero pitch angle conditions but also under non-zero roll angle conditions. For example, in the embodiments in which the support means comprises a plurality of tray supports 110, 112, is it envisaged that the tray supports in a pair of tray supports may be raised or lowered unequally such that a "sideways" tilting of the meal trays 102 with respect to the oven 200, i.e. tilting around the roll axis, is achieved. The meal tray 102 may be tilted into any orientation with respect to the oven 200 either around the pitch axis, roll axis or a combination of both axes. As can be appreciated, This means that even upon sharp turning of the aircraft, during which the aircraft is tilted at a significant roll angle, the meal tray 102 in the oven 200 may be kept perpendicular to the direction of gravity to avoid spillage of meal contents. The ability of the adjustment means to adjust the support means to orientate the meal tray 102 in a combination of magnitudes in the roll and pitch axes means that meal spillage may be avoided when an aircraft turns, i.e. has a non-zero roll angle during a take-off or landing portion of a flight segment, for example.

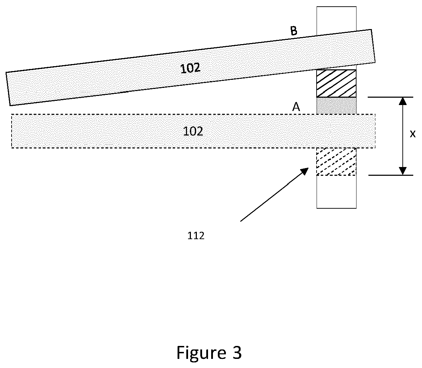

Figure 3 illustrates an example of a movable tray support 112 and meal tray 102 for use in an oven 200 of the present disclosure. The meal tray 102 shown in dotted lines in position A is supported by the support means in its default, unadjusted state. The tray support 112 shown in dotted lines in position A forms part of the support means in this embodiment. The tray support 112 is mounted to a sidewall 214 of the heating cavity of the oven 200. The tray support 112 is configured to be movable with respect to the heating cavity sidewall 214 by a distance x between positions A and B. The direction illustrated by the arrow x may be along a straight line between the upper and lower surfaces of the heating cavity. In other words, the direction x may be normal to the upper surface of a meal tray 102 when said meal tray 102 is supported by the support means in its default unadjusted state. As can be seen, moving the tray support 112 in a direction x affects the mounted position of the respective end of the meal tray 102 with respect to the heating cavity. This therefore can affect the orientation of the meal tray 102 with respect to the heating cavity. In some embodiments, at least two tray supports 112 are moveable with respect to the heating cavity to enable tilting of the meal tray 102 around at least one axis.

In other embodiments, four tray supports 110, 112 are positioned proximate each of the four corners of a meal tray 102 supported thereby, each tray support 110, 112 being configured to be movable, via an adjustment means, with respect to the heating cavity of the oven. This enables rotation of the meal tray 102 around either the roll axis, the perpendicular pitch axis or a combination of both of these axes, when the oven 200 is mounted in an aircraft.

In some embodiments, the support means may be provided with a biasing means (not shown) configured to bias the support means into its default unadjusted state. The biasing means is configured such that when the adjustment means is disengaged, the meal tray 102 returns to its position when supported by the support means in its default unadjusted state. This biasing means provides that no work is required to be performed by the adjustment means to return the support means towards its default unadjusted state. The adjustment means needs only to be able to adjust the support means away from its default unadjusted state. This may simplify the mechanism of the adjustment means or allow for particular mechanisms which would not function properly without said biasing means. The support means may be configured such that in its default unadjusted state, it supports a meal tray 102 such that the upper surface of the meal tray is parallel to the cabin floor. The cabin floor is assumed to be parallel to the longitudinal axis of the aircraft.

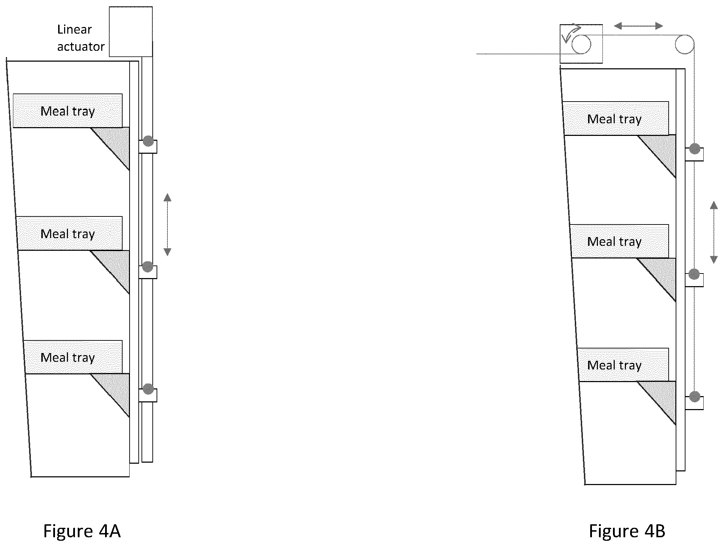

Although the aforementioned embodiments have been described with a single support means and meal tray 102 provided in the oven heating cavity, it should be appreciated that the oven 200 can comprise any number of similar support means. Said support means may be positioned one above the other as shown in Figures 2A-2C and 4A and 4B. Figures 4A and 4B illustrate two possible embodiments of the adjustment means as herein described. One way in which the support means may be adjusted, in terms of its position with respect to the oven heating cavity, is via a linear actuator mechanism. It is envisaged that each support means may be provided with one or more dedicated linear actuators configured to be controlled by a controller to adjust the support means so as to orientate a meal tray 102 supported thereby in any particular orientation around the roll and/or pitch axes. In embodiments where the support means comprises a plurality of tray supports 110, 112, each tray support may be provided with its own dedicated linear actuator, configured to move, or raise and lower, each tray support 110, 112 individually. However, in systems comprising a plurality of stacked support means to support a plurality of meal trays, one or more linear actuators may be provided to adjust the position of each of the support means in the same manner simultaneously.

In simpler systems, for example when only a front or rear pair of tray supports 110, 112 are configured to move with respect to the heating cavity, only a single linear actuator may be provided, configured to adjust the position of each tray support in the pair in the same manner simultaneously. In systems comprising a plurality of stacked said support means, as shown in Figure 4A, it is even considered that only a single linear actuator may be employed to adjust the positions of the front or rear pairs of tray supports 110, 112 of each support means in the same manner simultaneously.

Figure 4B illustrates the use of an electric motor and pulley system for performing the same function as the linear actuator(s) as previously described. An electric motor may be provided to pull a cable via one or more pulleys to exact an upwards force (towards to the upper surface of the heating cavity) on the support means. Just as with the linear actuator(s), a plurality of the electric motor and pulley systems may be provided for one support means. When the support means comprises at least four tray supports 110, 112, said four tray supports 110, 112 positioned in pairs at the front 210 and rear 212 ends of the heating cavity, each of the four tray supports 110, 112 may be provided with a separate motor and pulley system, to allow for individual control of each support and a full range of motion of a meal tray 102 positioned on the support means in either the roll or pitch axes or a combination of both. When the oven 200 is provided with a plurality of support means stacked one above another, as shown in Figure 4B, the electric motor and pulley system(s) may be configured to adjust the position of each support means in the same manner simultaneously.

In simpler systems wherein only a front or rear pair of tray supports 110, 112 are configured to move with respect to the heating cavity, a single electric motor and pulley system may be provided to adjust the position of each tray support 110, 112 in the pair simultaneously in the same manner. When a plurality of such support means are provided one above the other, actuation of the front or rear pairs of tray supports 110, 112 of each support means be simultaneously adjusted in the same manner simultaneously through just one motor and pulley system. A biasing means to bias the support means into its default unadjusted state is particularly useful for a system comprising an adjustment means in the form of an electric motor and pulley system, since the pulley system is only capable of exerting a force on the support means in one direction. The biasing means therefore provides an opposing force when adjustment of the support means in an opposite direction, towards the default unadjusted state is required. For safety and operability reasons, the adjustment means, be it a linear actuator, pulley, or other system, may be at least partially disposed external to the oven heating cavity.

Although this disclosure has been described in terms of preferred examples, it should be understood that these examples are illustrative only and that the claims are not limited to those examples. Those skilled in the art will be able to make modifications and alternatives in view of the disclosure, insofar as they fall within the scope of the appended claims.

## Claims

1. An oven (200) for use in an aircraft, comprising:
a heating cavity;
a meal tray (102) within the heating cavity;
a support means configured to support the
meal tray (102) within the heating cavity;
a sensor configured to produce an output indicative of the orientation of the oven with respect to the direction of gravity;
an adjustment means;
a controller configured to receive the output from the sensor and control the adjustment means based on said output to, in response to a change in orientation of the oven with respect to the direction of gravity, adjust the support means away from a default unadjusted state, **characterised in that**, by adjustment of the support means, the upper surface of the
meal tray supported thereby is maintained in a plane perpendicular to the direction of gravity.

2. The oven of claim 1, wherein the adjustment means comprises an electric motor coupled to a pulley system, the pulley system coupled to the support means and the electric motor configured to drive the pulley system to adjust the support means.

3. The oven of any of claims 1 or 2, wherein the adjustment means comprises one or more linear actuators coupled to the support means.

4. The oven of any preceding claim, wherein the support means comprises a plurality of tray supports (110, 112) mounted to the walls of the heating cavity.

5. The oven of claim 4, wherein the adjustment means is configured to adjust the position of at least two of the tray supports (110, 112) with respect to the walls of the heating cavity.

6. The oven of any preceding claim, wherein the oven (200) comprises a plurality of said support means arranged one above another in the heating cavity.

7. The oven of claim 6, wherein the adjustment means is configured to adjust each of the plurality of support means simultaneously in the same manner.

8. The oven of any preceding claim, wherein the oven further comprises a biasing means configured to bias the support means into the default unadjusted state upon disengagement of the adjustment means.

9. An aircraft, comprising:
the oven (200) of any preceding claim;
wherein, in the default unadjusted state, the support means of the oven is configured to support the meal tray such that the upper surface of the meal tray is orientated parallel to the pitch axis and roll axis of the aircraft.

10. A method of adjusting the orientation of a meal tray in an oven suitable for use in an aircraft, comprising:
sensing, with a sensor, a change in the orientation of the oven with respect to the direction of gravity;
receiving an output of the sensor at a controller;
using the controller to adjust the orientation of the meal tray supported in the oven by support means with respect to the oven such that the upper surface of the meal tray is maintained in a plane perpendicular to the direction of gravity;
wherein the adjusting of the orientation of the meal tray is achieved by adjusting the support means away from a default unadjusted state.

11. The method of claim 10, wherein the support means support the meal tray in a heating cavity in the oven and comprises a plurality of tray supports; and wherein the orientation of the meal tray is adjusted by adjusting the position of two or more tray supports of the plurality of tray supports with respect to the heating cavity.

12. The method of claim 10 or 11, wherein a plurality of meal trays are located in the oven and wherein the adjusting step is performed on each meal tray simultaneously.

13. The method of any of claims 10 to 12, comprising, as an initial step, installing the oven in a galley of an aircraft.

## Patentansprüche

1. Ein Ofen (200) zur Verwendung in einem Luftfahrzeug, umfassend:
einen Heizraum;
ein Speisetablett (102) innerhalb des Heizraums;
eine Haltevorrichtung, die dazu ausgebildet ist, das Speisetablett (102) innerhalb des Heizraums zu tragen;
einen Sensor, der dazu ausgebildet ist, ein Ausgangssignal zu erzeugen, das die Ausrichtung des Ofens in Bezug auf die Richtung der Schwerkraft angibt;
eine Verstellvorrichtung;
eine Steuerung, die dazu ausgebildet ist, das Ausgangssignal von dem Sensor zu empfangen und die Verstellvorrichtung basierend auf diesem Ausgangssignal zu steuern, um, als Reaktion auf eine Änderung der Ausrichtung des Ofens in Bezug auf die Richtung der Schwerkraft, die Haltevorrichtung aus einem unverstellten Standardzustand heraus zu verstellen,
**dadurch gekennzeichnet, dass** durch die Verstellung der Haltevorrichtung die
Oberseite des davon getragenen Speisetabletts in einer Ebene senkrecht zur Richtung der Schwerkraft gehalten wird.

2. Der Ofen nach Anspruch 1, wobei die Verstellvorrichtung einen Elektromotor umfasst, der mit einem Riemenscheibensystem gekoppelt ist, wobei das Riemenscheibensystem mit der Haltevorrichtung gekoppelt ist und der Elektromotor dazu ausgebildet ist, das Riemenscheibensystem anzutreiben, um die Haltevorrichtung zu verstellen.

3. Der Ofen nach einem der Ansprüche 1 oder 2, wobei die Verstellvorrichtung einen oder mehrere Linearaktuatoren umfasst, die mit der Haltevorrichtung gekoppelt sind.

4. Der Ofen nach einem der vorhergehenden Ansprüche, wobei die Haltevorrichtung eine Mehrzahl von Tablettträgern (110, 112) umfasst, die an den Wänden des Heizraums montiert sind.

5. Der Ofen nach Anspruch 4, wobei die Verstellvorrichtung dazu ausgebildet ist, die Position von mindestens zwei der Tablettträger (110, 112) in Bezug auf die Wände des Heizraums zu verstellen.

6. Der Ofen nach einem der vorhergehenden Ansprüche, wobei der Ofen (200) eine Mehrzahl der genannten Haltevorrichtungen umfasst, die übereinander im Heizraum angeordnet sind.

7. Der Ofen nach Anspruch 6, wobei die Verstellvorrichtung dazu ausgebildet ist, jede der mehreren Haltevorrichtungen gleichzeitig in derselben Weise zu verstellen.

8. Der Ofen nach einem der vorhergehenden Ansprüche, wobei der Ofen ferner eine Vorspannvorrichtung umfasst, die dazu ausgebildet ist, die Haltevorrichtung bei Außereingriffnahme der Verstellvorrichtung in den unverstellten Standardzustand vorzuspannen.

9. Ein Luftfahrzeug, umfassend:
den Ofen (200) nach einem der vorhergehenden Ansprüche;
wobei im unverstellten Standardzustand die Haltevorrichtung des Ofens dazu ausgebildet ist, das Speisetablett so zu tragen, dass die Oberseite des Speisetabletts parallel zur Nickachse und Rollachse des Luftfahrzeugs ausgerichtet ist.

10. Ein Verfahren zum Verstellen der Ausrichtung eines Speisetabletts in einem für die Verwendung in einem Luftfahrzeug geeigneten Ofen, umfassend:
Erfassen, mit einem Sensor, einer Änderung der Ausrichtung des Ofens in Bezug auf die Richtung der Schwerkraft;
Empfangen eines Ausgangssignals des Sensors an einer Steuerung;
Verwenden der Steuerung, um
die Ausrichtung des in dem Ofen durch eine Haltevorrichtung getragenen Speisetabletts in Bezug auf den Ofen so zu verstellen, dass die Oberseite des Speisetabletts in einer Ebene senkrecht zur Richtung der Schwerkraft gehalten wird;
wobei das Verstellen der Ausrichtung des Speisetabletts durch Verstellen der Haltevorrichtung aus einem unverstellten Standardzustand heraus erreicht wird.

11. Das Verfahren nach Anspruch 10, wobei die Haltevorrichtung das Speisetablett in einem Heizraum in dem Ofen trägt und eine Mehrzahl von Tablettträgern umfasst; und wobei die Ausrichtung des Speisetabletts durch Verstellen der Position von zwei oder mehr Tablettträgern der Mehrzahl von Tablettträgern in Bezug auf den Heizraum verstellt wird.

12. Das Verfahren nach Anspruch 10 oder 11, wobei sich eine Mehrzahl von Speisetabletts in dem Ofen befindet und wobei der Verstellschritt bei jedem Speisetablett gleichzeitig durchgeführt wird.

13. Das Verfahren nach einem der Ansprüche 10 bis 12, umfassend, als ersten Schritt, das Installieren des Ofens in einer Galley eines Luftfahrzeugs.

## Revendications

1. Four (200) destiné à être utilisé dans un aéronef, comprenant :
une cavité de chauffe ;
un plateau-repas (102) situé à l'intérieur de la cavité de chauffe ;
un moyen de support configuré pour supporter le
plateau-repas (102) à l'intérieur de la cavité de chauffe ;
un capteur configuré pour produire une sortie indicative de l'orientation du four par rapport à
la direction de la gravité ;
un moyen de réglage ;
un contrôleur configuré pour recevoir la sortie du capteur et commander le moyen de réglage
en fonction de ladite sortie afin de, en réponse à un changement d'orientation du four par rapport à
la direction de la gravité, ajuster le moyen de support à partir d'un état non ajusté par défaut, **caractérisé en ce que**, par ajustement du moyen de support, la surface supérieure du
plateau-repas supporté par celui-ci est maintenue dans un plan perpendiculaire à la direction de la gravité.

2. Le four de la revendication 1, dans lequel le moyen de réglage comprend un moteur électrique couplé
à un système de poulies, le système de poulies étant couplé au moyen de support et le moteur électrique
étant configuré pour entraîner le système de poulies afin d'ajuster le moyen de support.

3. Le four de l'une quelconque des revendications 1 ou 2, dans lequel le moyen de réglage comprend un ou plusieurs
actionneurs linéaires couplés au moyen de support.

4. Le four de l'une quelconque des revendications précédentes, dans lequel le moyen de support comprend une pluralité de
supports de plateau (110, 112) montés sur les parois de la cavité de chauffe.

5. Le four de la revendication 4, dans lequel le moyen de réglage est configuré pour ajuster la position d'au moins
deux des supports de plateau (110, 112) par rapport aux parois de la cavité de chauffe.

6. Le four de l'une quelconque des revendications précédentes, dans lequel le four (200) comprend une pluralité desdits
moyens de support disposés les uns au-dessus des autres dans la cavité de chauffe.

7. Le four de la revendication 6, dans lequel le moyen de réglage est configuré pour ajuster chacun de la
pluralité de moyens de support simultanément et de la même manière.

8. Le four de l'une quelconque des revendications précédentes, dans lequel le four comprend en outre un moyen de rappel
configuré pour rappeler le moyen de support vers l'état non ajusté par défaut lors du désengagement
du moyen de réglage.

9. Un aéronef, comprenant :
le four (200) de l'une quelconque des revendications précédentes ;
dans lequel, dans l'état non ajusté par défaut, le moyen de support du four est configuré pour
supporter le
plateau-repas de telle sorte que la surface supérieure du plateau-repas soit orientée parallèlement à l'axe
de tangage et à l'axe de roulis de l'aéronef.

10. Un procédé d'ajustement de l'orientation d'un plateau-repas dans un four adapté à être utilisé dans
un aéronef, comprenant :
la détection, par un capteur, d'un changement de l'orientation du four par rapport à la
direction de la gravité ;
la réception d'une sortie du capteur au niveau d'un contrôleur ;
l'utilisation du contrôleur pour ajuster
l'orientation du
plateau-repas supporté dans le four par un moyen de support par
rapport au four de telle sorte que la surface supérieure du plateau-repas soit maintenue dans un plan
perpendiculaire à la direction de la gravité ;
dans lequel l'ajustement de l'orientation du plateau-repas est réalisé en ajustant le
moyen de support à partir d'un état non ajusté par défaut.

11. Le procédé de la revendication 10, dans lequel le moyen de support supporte le plateau-repas dans une cavité
de chauffe du four et comprend une pluralité de supports de plateau ; et dans lequel l'orientation
du plateau-repas est ajustée en ajustant la position de deux ou plusieurs supports de plateau parmi la
pluralité de supports de plateau par rapport à la cavité de chauffe.

12. Le procédé de la revendication 10 ou 11, dans lequel une pluralité de plateauxrepas sont situés dans le four et
dans lequel l'étape d'ajustement est effectuée sur chaque plateau-repas simultanément.

13. Le procédé de l'une quelconque des revendications 10 à 12, comprenant, comme étape initiale, l'installation du four
dans un office d'un aéronef.
